# EUROPÄISCHE PATENTSCHRIFT

(11) **EP 2 611 598 B1**
(45) Veröffentlichungstag und Bekanntmachung des Hinweises auf die Patenterteilung: **25.03.2015**
(21) Anmeldenummer: 11748661.3
(22) Anmeldetag: 25.08.2011
(51) Int. Cl.: B29C 70/38, B25J 5/02, B25J 9/00

(54) **FERTIGUNGSANLAGE ZUR HERSTELLUNG VON FASERVERBUNDMATERIAL-BAUTEILEN**
MANUFACTURING SYSTEM FOR PRODUCING FIBER COMPOSITE MATERIAL COMPONENTS
INSTALLATION DE FABRICATION POUR LA PRODUCTION DE COMPOSANTS EN MATERIAU COMPOSITE FIBREUX

(30) Priorität: 30.08.2010 DE 102010039955
(43) Veröffentlichungstag der Anmeldung: 10.07.2013
(73) Patentinhaber: MAG IAS GmbH, 73033 Göppingen (DE); Deutsches Zentrum für Luft- und Raumfahrt e.V., 51147 Köln (DE)
(72) Erfinder: BOGE, Christian, 74821 Mosbach (DE); MEYER, Matthias, 73033 Göppingen (DE); PAUSE, Bernhard, 74821 Mosbach (DE); RÖSTERMUNDT, Dirk, 31224 Peine (DE)
(74) Vertreter: Weilnau, Carsten
(86) Internationale Anmeldenummer: PCT/EP2011/064628
(87) Internationale Veröffentlichungsnummer: WO 2012/028531

(56) Entgegenhaltungen:
- WO-A1-03/035380
- DE-A1- 19 537 663
- DE-A1-102007 054 645
- DE-A1-102010 015 027
- US-A- 4 588 466

## Beschreibung

Die Erfindung betrifft eine Fertigungsanlage zur Herstellung von Faserverbundmaterial-Bauteilen gemäß dem Oberbegriff des Anspruchs 1.

Aus der WO 2005/105 641 A2 ist eine Fertigungsanlage zur Herstellung von Faserverbundmaterial-Bauteilen bekannt, bei der beidseitig einer Bauteilform geradlinige Führungsbahnen zur Führung von Fertigungseinheiten angeordnet sind. Auf jeder der Führungsbahnen sind zwei Fertigungseinheiten verfahrbar angeordnet, die zum Auftragen von Faserverbundmaterial auf die Bauteilform dienen. Die Fertigungsanlage weist eine Master-Slave-Steuerung auf. Die Steuerung einer der Fertigungseinheiten ist als Master-Steuerung ausgebildet, wohingegen die Steuerungen der weiteren Fertigungseinheiten als Slave-Steuerungen ausgebildet sind. Die Master-Steuerung definiert eine gemeinsame Zeitbasis und synchronisiert mittels der Slave-Steuerungen die Bewegung der Bearbeitungsköpfe der Fertigungseinheiten. Aufgrund der Mehrzahl von Fertigungseinheiten weist die Fertigungsanlage eine hohe Effizienz auf, jedoch besteht auf Kundenseite ein stetiger Bedarf, die Herstellung von Faserverbundmaterial-Bauteilen noch effizienter und flexibler zu gestalten.

Die US 4 588 466 A beschreibt eine Fertigungsanlage zur Herstellung von Faserverbundmaterial-Bauteilen. Die Anlage weist einen Arbeitstisch auf, auf dessen Oberfläche Faserverbundmaterial mittels zweier zusammengehöriger Auftragseinheiten und zwei Anpresseinheiten aufgetragen wird. Die Auftrags- und Anpresseinheiten sind entlang einer ovalen Führungsbahn um den Arbeitstisch verfahrbar.

Der Erfindung liegt die Aufgabe zugrunde, eine Fertigungsanlage der gattungsgemäßen Art derart weiterzubilden, dass eine effizientere und flexiblere Herstellung von Faserverbundmaterial-Bauteilen möglich ist.

Diese Aufgabe wird durch eine Fertigungsanlage mit den Merkmalen des Anspruchs 1 gelöst. Dadurch, dass die Führungsbahn um die Formbereitstellungseinheit bzw. die Bauteilform umlaufend ausgebildet ist, können die mindestens zwei Fertigungseinheiten die Bauteilform entlang der Führungsbahn kreisartig umfahren. Die Führungsbahn bildet somit für die mindestens zwei Fertigungseinheiten eine Umlaufbahn zur Herstellung des Faserverbundmaterial-Bauteils aus, auf der die mindestens zwei Fertigungseinheiten im Kreismodus gleichzeitig betreibbar sind. Hierdurch ist gewährleistet, dass die mindestens zwei Fertigungseinheiten eine einheitliche und gleichbleibende Verfahrrichtung aufweisen, so dass die mindestens zwei Fertigungseinheiten in einem dichten Abstand zueinander betreibbar sind. Durch die kreisartige Bewegung der mindestens zwei Fertigungseinheiten werden Kollisionen zwischen den Fertigungseinheiten auf einfache Weise vermieden. Durch die einheitliche und gleichbleibende Verfahrrichtung ist es insbesondere möglich, eine Vielzahl von Fertigungseinheiten im Kreismodus zu betreiben, wodurch die Effizienz erheblich gesteigert wird. Die erfindungsgemäße Fertigungsanlage ermöglicht - je nach Größe des zu fertigenden Faserverbundmaterial-Bauteils - den Einsatz von mindestens fünf, insbesondere von mindestens sechs und insbesondere von mindestens acht Fertigungseinheiten.

Darüber hinaus werden im Vergleich zu einer geradlinigen und nicht um-laufenden Führungsbahn die Stillstandszeiten der Fertigungseinheiten reduziert, da eine Fertigungseinheit nach einem Materialauftragsvorgang unmittelbar mit einem neuen Materialauftrags Vorgang fortfahren kann, wohingegen bei einer nicht umlaufenden Führungsbahn eine Fertigungseinheit nach einem Materialauftragsvorgang solange warten muss, bis auch die nächste Fertigungseinheit ihren Materialauftragsvorgang abgeschlossen hat und beide Fertigungseinheiten einen Verfahrrichtungswechsel durchführen können. Ein wesentlicher Effizienzvorteil ergibt sich außerdem dann, wenn eine Fertigungseinheit einen Materialauftragsvorgang infolge eines Fehlers abbrechen muss. In diesem Fall kann die Fertigungseinheit, die den Materialauftragsvorgang abgebrochen hat, nach einem Verfahrvorgang einen neuen Materialauftragsvorgang am Anfang der Bauteilform beginnen, wodurch die nachfolgende Fertigungseinheit nicht beeinträchtigt wird. Die nachfolgende Fertigungseinheit kann ggf. den abgebrochenen Materialauftragsvorgang fortführen bzw. durch einen entsprechend angepassten Materialauftragsvorgang ausgleichen. Insgesamt wird somit durch die erfindungsgemäße Fertigungsanlage eine im Vergleich zum Stand der Technik höhere Anlagenverfügbarkeit und damit höhere Fertigungseffzienz bzw. Fertigungsproduktivität und eine höhere Fertigungsflexibilität erzielt.

Die Fertigungsanlage führt ferner zu einer höheren Fertigungsproduktivität undflexibilität. Durch den separaten Wartungs-Bahnabschnitt kann eine Fertigungseinheit einem Wartungsvorgang und/oder einem Rüstvorgang unterzogen werden, ohne dass die auf der ersten Umlaufbahn befindlichen Fertigungseinheiten in ihren Verfahrvorgängen beeinträchtigt werden. Hierdurch werden von der Herstellung des Faserverbundmaterial-Bauteils entkoppelte und unabhängige Wartungs- und/oder Rüstvorgänge ermöglicht. Beispielsweise kann sich ein Teil der Fertigungseinheiten im Herstellungsvorgang befinden, wohingegen der andere Teil der Fertigungseinheiten einem Rüstvorgang unterzogen wird, so dass die aufgerüsteten Fertigungseinheiten unmittelbar mit der Herstellung des Faserverbundmaterial-Bauteils fortfahren können, wenn die in der Herstellung befindlichen Fertigungseinheiten den Herstellungsvorgang infolge von Materialmangel abbrechen müssen.

Die Fertigungsanlage erhöht ferner die Flexibilität beim Warten und Rüsten der Fertigungseinheiten. Durch die sackgassenartigen Stations-Bahnabschnitte blockieren in einem Wartungs- bzw. Rüstvorgang befindliche Fertigungseinheiten nicht das Warten bzw. Rüsten weiterer Fertigungseinheiten. Die Fertigungsanlage weist insbesondere mindestens drei, insbesondere mindestens vier und insbesondere mindestens sechs Wartungsstationen auf. Eine Fertigungsanlage nach Anspruch 2 gewährleistet kurze Verfahrwege. Hierdurch wird die Fertigungsproduktivität optimiert.

Die Fertigungsanlage erhöht die Flexibilität beim Warten und Rüsten der Fertigungseinheiten. Dadurch, dass der Wartungs-Bahnabschnitt Teil einer Umlaufbahn ist, können die Fertigungseinheiten zu Wartungs- und Rüstzwecken an verschiedenen Stellen der Umlaufbahn zur Herstellung des Faserverbundmaterial-Bauteils entnommen bzw. an verschiedenen Stellen wieder dieser Umlaufbahn zugeführt werden. Hierdurch kann beispielsweise gleichzeitig eine Fertigungseinheit zu Rüstzwecken dem Herstellungsvorgang entnommen und eine weitere Fertigungseinheit dem Herstellungsvorgang zugeführt werden.

Die Fertigungsanlage gewährleistet zudem eine bedarfsgerechte Anordnung der Wartungsstationen. Die in dem Innenraum angeordneten Stations-Bahnabschnitte optimieren den Platzbedarf der Fertigungsanlage, wohingegen die im Außenraum angeordneten Stations-Bahnabschnitte leicht zugänglich sind. Eine hohe Anzahl von Wartungsstationen wird dann erzielt, wenn Stations-Bahnabschnitte sowohl im Innenraum als auch im Außenraum angeordnet sind.

Eine Fertigungsanlage nach Anspruch 2 ermöglicht auf einfache Weise einen schnellen Verfahrrichtungswechsel der mindestens zwei Fertigungseinheiten. Die Schwenkstationen sind Teil der Führungsbahn, so dass ein Verfahrrichtungswechsel derart möglich ist, dass eine Fertigungseinheit auf die Schwenkstation verfahren und anschließend mittels der Schwenkstation derart verschwenkt wird, dass die Fertigungseinheit mit geänderter Verfahrrichtung auf der Führungsbahn weiter verfahren werden kann. Die Schwenkstationen sind insbesondere mindestens um 90°, insbesondere mindestens um 180° und insbesondere um mindestens 360 ° verschwenkbar. Darüber hinaus sind die Schwenkstationen vorzugsweise in beiden Schwenkrichtungen verschwenkbar.

Eine Fertigungsanlage nach Anspruch 3 erhöht die Fertigungsproduktivität und - flexibilität. Dadurch, dass Faserverbundmaterial zweiseitig auf die mindestens eine Bauteilform auftragbar ist, kann beispielsweise ein Rumpfbauteil eines Flugzeuges mit einer Vielzahl von Fertigungseinheiten schneller hergestellt werden. Darüber hinaus können mit zwei Bauteilformen, die an dem Formträger angeordnet sind, beispielsweise zwei Flügelbauteile eines Flugzeuges gleichzeitig hergestellt werden. Durch die geradlinig ausgebildeten Fertigungs-Bahnabschnitte wird der Materialauftragsvorgang vereinfacht.

Eine Fertigungsanlage nach Anspruch 4 führt zu einer deutlichen Erhöhung der Fertigungsproduktivität. Da die Fertigungseinheiten bei der Herstellung des Faserverbundmaterial-Bauteils im Kreismodus betrieben werden, können vergleichsweise viele Fertigungseinheiten in geringen Abständen an der Herstellung mitwirken. Darüber hinaus können parallel zu der Herstellung eine ausreichende Anzahl von Fertigungseinheiten gewartet und gerüstet werden, so dass ein kontinuierlicher Fertigungsprozess mit hoher Produktivität gewährleistet wird.

Eine Fertigungsanlage nach Anspruch 5 weist vollständig autarke Fertigungseinheiten auf. Die Energieversorgungseinrichtung ist insbesondere derart ausgebildet, dass die jeweilige Fertigungseinheit entlang der gesamten Führungsbahn frei verfahrbar ist. Hierzu kann die Energieversorgungs-einrichtung beispielsweise eine auf dem Schlitten mitgeführte Batterie oder Schleifkontakte zur Energieübertragung aufweisen. Insbesondere weisen die Fertigungseinheiten jedoch keine leitungsgebundene Energieübertragung auf, wie beispielsweise Energieketten, so dass ein freies Verfahren der Fertigungseinheiten gewährleistet ist.

Eine Fertigungsanlage nach Anspruch 6 gewährleistet ein freies Verfahren der jeweiligen Fertigungseinheit. Der erste Schleifkontakt ist beispielsweise an dem Schlitten angeordnet und ist in Kontakt mit einem zugehörigen zweiten Schleifkontakt, der an der Führungsbahn angeordnet ist. Über die Schleifkontakte erfolgt eine Energieversorgung der jeweiligen Fertigungseinheit, wobei die Bewegungsfreiheit nicht beeinträchtigt wird. Insbesondere weisen auch die schwenkbaren Abschnitte der Schwenkstationen Schleifkontakte zur Energieversorgung der jeweiligen Fertigungseinheit auf der Schwenkstation auf. Eine Fertigungsanlage nach Anspruch 7 gewährleistet eine hohe Flexibilität bei der Herstellung von Faserverbundmaterial-Bauteilen. Durch die Vielzahl der Schwenkachsen ist eine flexible Positionierung des Bearbeitungswerkzeuges relativ zu der Bauteilform möglich. Als Bearbeitungs-Werkzeug dienen insbesondere Faserlegeköpfe, die sogenannte Prepregs, also bahnförmiges Faserverbundmaterial auf die Bauteilform aufbringen können.

Eine Fertigungsanlage nach Anspruch 8 erhöht die Fertigungsproduktivität und - flexibilität. Durch die auswechselbar an der Positioniereinrichtung befestigbaren Bearbeitungswerkzeuge können mit der Fertigungsanlage eine Vielzahl von Herstellungsschritten durchgeführt werden. Nach dem Auftragen des Faserverbundmaterials kann durch ein spezielles Bearbeitungswerkzeug bzw. einen speziellen Endeffektor eine Qualitätsprüfung des gelegten Faserverbundmaterials bzw. des gelegten Laminats erfolgen. Nach einem separaten Aushärteprozess des Laminats ist eine mechanische Bearbeitung möglich. Beispielsweise kann nach dem Aushärten des Faser-verbundmaterial-Bauteils eine Bohr- oder Fräsbearbeitung durchgeführt werden.

Eine Fertigungsanlage nach Anspruch 9 ermöglicht auf einfache Weise den Austausch von NC-Steuerungsprogrammen zwischen der Leit-Steuer-einrichtung und den Steuereinrichtungen der Fertigungseinheiten. Die Datenübertragung bzw. die Übertragung der NC- Steuerungsprogramme erfolgt beispielsweise über WLAN. Hierzu weist das WLAN beispielsweise mehrere sogenannte Access-Points auf, also Verbindungsbereiche, in denen eine Datenübertragung erfolgen kann.

Eine Fertigungsanlage nach Anspruch 10 gewährleistet eine hohe Flexibilität und Sicherheit. Die jeweilige Fertigungseinheit wird mittels ihrer Steuereinrichtung dezentral gesteuert, so dass keine aufwendige Datenübertragung zwischen der Leit-Steuereinrichtung und den einzelnen Steuereinrichtungen der Fertigungseinheiten erforderlich ist. Die Leit- Steuereinrichtung und die Steuereinrichtungen der Fertigungseinheiten weisen insbesondere keine gemeinsame Zeitbasis im Sinne einer Rechnertaktsynchronisation bzw. keinen gemeinsamen Zeittakt auf. Entsprechendes gilt für die Steuereinrichtungen der Fertigungseinheiten untereinander. Kollisionen zwischen den einzelnen Fertigungseinheiten werden beispielsweise durch an den Fertigungseinheiten angeordnete Abstandssensoren vermieden, die die Bewegung der jeweiligen Fertigungseinheit in Verbindung mit der zugehörigen Steuereinrichtung dezentral überwachen. Weiterhin kann die Fertigungsanlage zur Vermeidung von Kollisionen ein Positionsüberwachungssystem aufweisen, das beispielsweise als sogenanntes Indoor-GPS-System ausgebildet ist. Bei Positionsabweichungen zwischen einer im NC-Steuerungsprogramm vorgegebenen Soll-Position und der ermittelten IstPosition kann die Bewegung der jeweiligen Fertigungseinheit angepasst werden. Beim Herstellungsvorgang eines Faserverbundwerkstoff-Bauteils muss die Leit-Steuereinrichtung aufgrund der dezentralen Steuerung die Fertigungseinheiten nicht führen und steuern. Die Leit-Steuereinrichtung kann im Notfall jedoch dazu genutzt werden, um eine Notaus-Funktion zu realisieren. Mittels der Leit-Steuereinrichtung werden vor der eigentlichen Herstellung eines Faserverbundmaterial-Bauteils die NC-Steuerungsprogramme zu den jeweiligen Fertigungseinheiten bzw. den zugehörigen Steuereinrichtungen übermittelt.

Weitere Merkmale, Vorteile und Einzelheiten der Erfindung ergeben sich aus der nachfolgenden Beschreibung eines Ausführungsbeispiels. Es zeigen:
- Fig. 1: eine perspektivische Ansicht einer Fertigungsanlage zur Herstellung eines Faserverbundmaterial-Bauteils mit mehreren auf einer Führungsbahn verfahrbaren Fertigungseinheiten,
- Fig. 2: eine Draufsicht auf die Fertigungsanlage in Fig. 1,

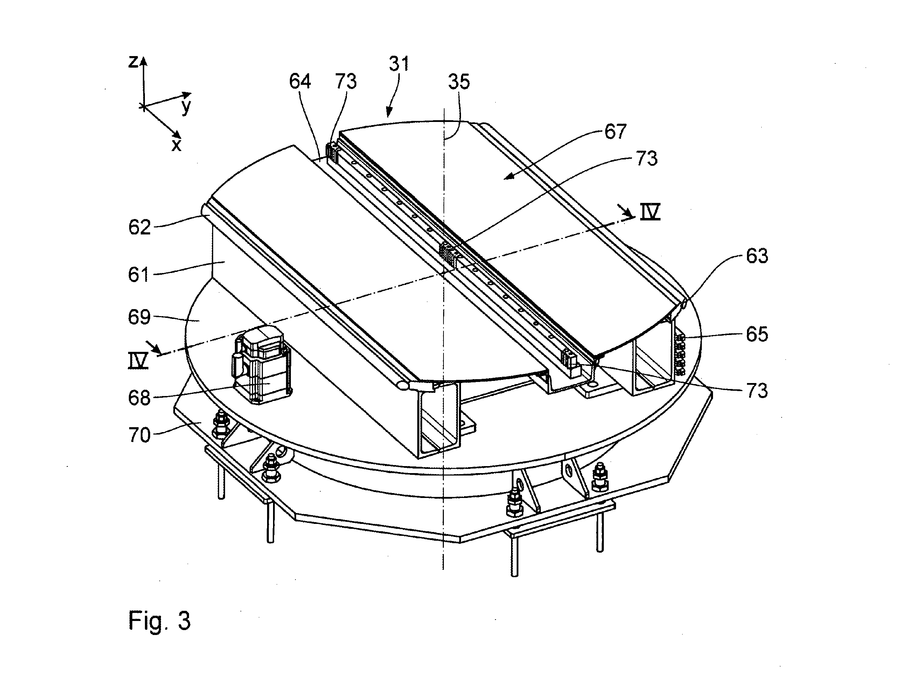

- Fig. 3: eine perspektivische Darstellung einer Schwenkstation der Führungsbahn in Fig. 1,

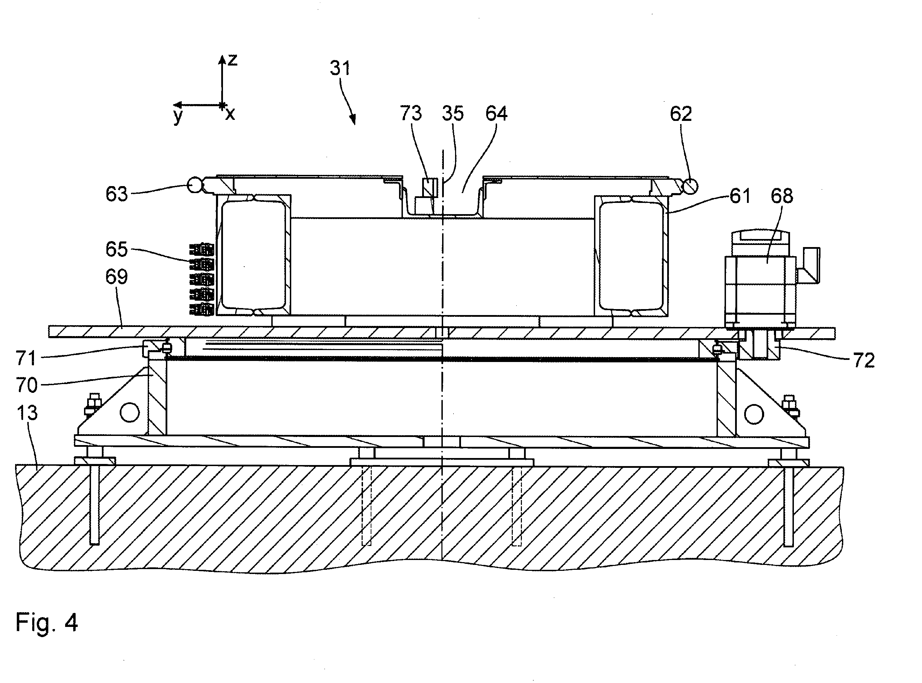

- Fig. 4: einen Axialschnitt durch die Schwenkstation in Fig. 3,

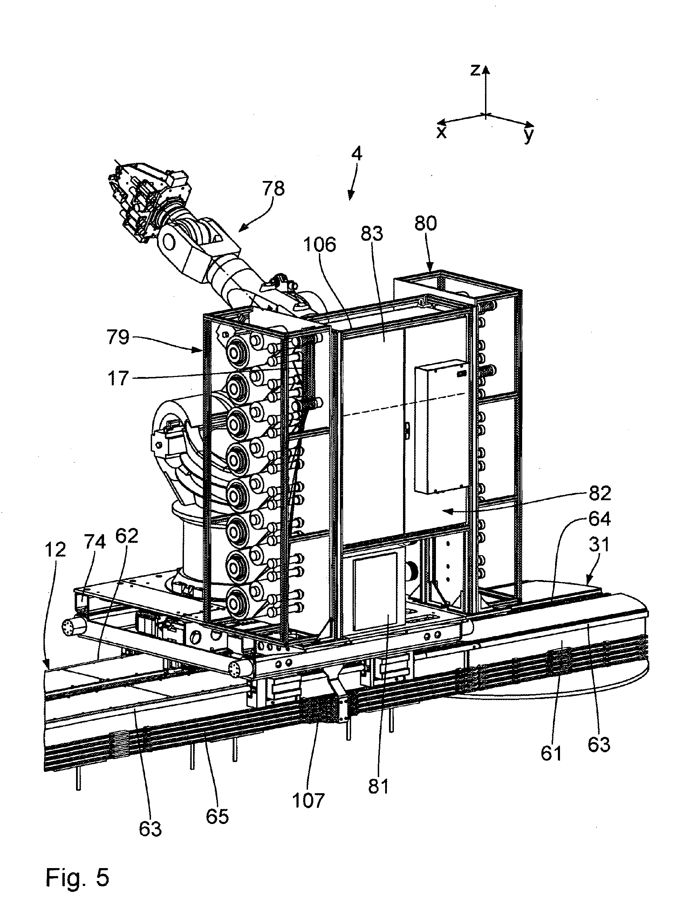

- Fig. 5: eine perspektivische Ansicht einer Fertigungseinheit in Fig. 1, und
- Fig. 6: eine teilweise geschnittene Seitenansicht der Fertigungseinheit in Fig. 5.

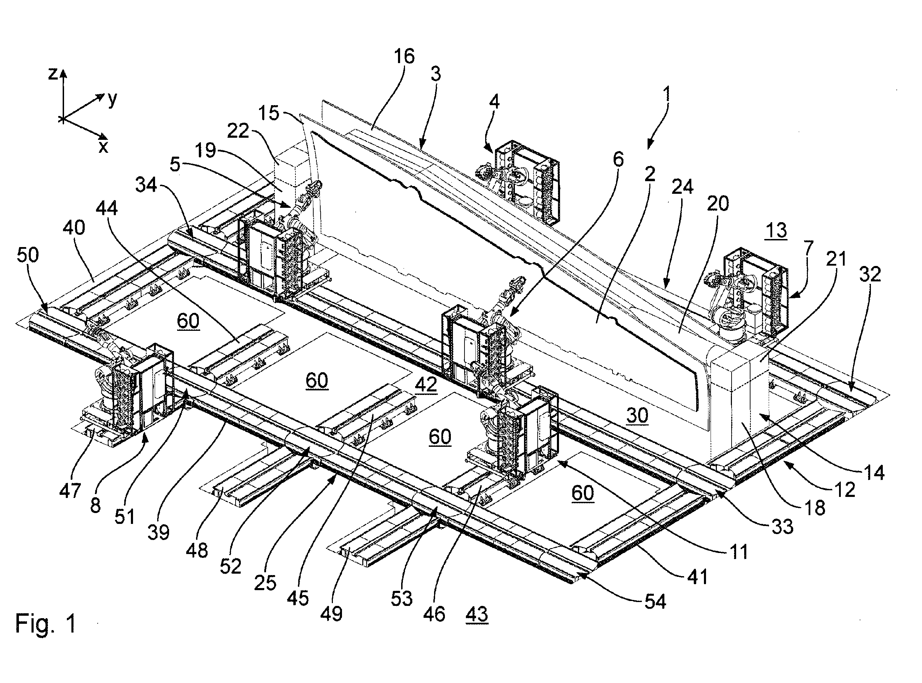

Eine Fertigungsanlage 1 weist zur Herstellung von zwei Faserverbundmaterial-Bauteilen 2 eine Formbereitstellungseinheit 3 sowie acht zugehörige Fertigungseinheiten 4 bis 11 auf. Die Fertigungseinheiten 4 bis 11 sind auf einer Führungsbahn 12 verfahrbar angeordnet. Die Formbereitstellungseinheit 3 und die Führungsbahn 12 sind auf einer Fundamentplatte 13 befestigt. In Fig. 1 sind aus Gründen der Übersichtlichkeit lediglich sechs der acht Fertigungseinheiten 4 bis 11 dargestellt.

Die Formbereitstellungseinheit 3 weist einen Formträger 14 auf, an dem zwei Bauteilformen 15, 16 für zwei Flugzeugflügel angeordnet sind. Die Flugzeugflügel werden aus einem bahnförmigen Faserverbundmaterial 17 hergestellt und bilden somit die Faserverbundmaterial-Bauteile 2. Der Formträger 14 umfasst zwei in einer horizontalen x-Richtung beabstandete Stützen 18, 19, zwischen denen eine Welle 20 drehbar gelagert ist. Die Welle 20 ist mittels zweier Antriebsmotoren 21, 22 um eine horizontale und parallel zu der x-Richtung verlaufende Drehachse 23 drehantreibbar. An der Welle 20 sind an gegenüberliegenden Seiten die Bauteilformen 15, 16 befestigt.

Die Fertigungseinheiten 4 bis 11 dienen zum Auftragen des Faserverbundmaterials 17 auf die Bauteilformen 15, 16. Hierzu sind die Fertigungseinheiten 4 bis 11 unabhängig voneinander auf der Führungsbahn 12 verfahrbar. Die Führungsbahn 12 weist im Wesentlichen die Form einer Acht auf und bildet zwei Umlaufbahnen 24, 25 aus. Eine erste Umlaufbahn 24 wird nachfolgend als Prozess-Umlaufbahn bezeichnet, wohingegen eine zweite Umlaufbahn 25 nachfolgend als Wartungs-Umlaufbahn bezeichnet wird. Die Prozess-Umlaufbahn 24 ist rechteckförmig ausgebildet und weist zwei in der x-Richtung verlaufende Fertigungs-Bahnabschnitte 26, 27 und zwei in einer y-Richtung senkrecht dazu verlaufende Verbindungs-Bahnabschnitte 28, 29 auf. Die Bahnabschnitte 26 bis 29 sind jeweils geradlinig ausgebildet und begrenzen einen Bearbeitungsraum 30, in dem die Formbereitstellungseinheit 3 angeordnet ist. Die Führungsbahn 12 ist somit um die Formbereitstellungseinheit 3 umlaufend ausgebildet, so dass die Formbereitstellungseinheit 3 von den Fertigungseinheiten 4 bis 11 entlang der Prozess-Umlaufbahn 24 kreisartig umfahrbar ist. Zum Verfahrrichtungswechsel bzw. zum Umsetzen der Fertigungseinheiten 4 bis 11 auf den jeweils nächsten Bahnabschnitt 26 bis 29 sind an den jeweiligen Ecken der Prozess-Umlaufbahn 24 Schwenkstationen 31 bis 34 angeordnet. Die Schwenkstationen 31 bis 34 weisen jeweils zugehörige Schwenkachsen 35 bis 38 auf, die parallel zu einer vertikalen z-Richtung verlaufen. Die x-, y-und z-Richtung bilden ein kartesisches Koordinatensystem.

Die Fertigungs-Bahnabschnitte 26, 27 sind gegenüberliegend zueinander angeordnet und jeweils einer der Bauteilformen 15, 16 zugeordnet. Der Fertigungs-Bahnabschnitt 27 ist beispielsweise derart zu der Bauteilform 15 angeordnet, dass mittels der Fertigungseinheiten 4 bis 11 Faserverbundmaterial 17 auf die Bauteilform 15 aufbringbar ist, wenn sich diese entlang des Fertigungs-Bahnabschnitts 27 bewegen. Entsprechendes gilt für den Fertigungs-Bahnabschnitt 26 und die zugeordnete Bauteilform 16.

Die Wartungs-Umlaufbahn 25 dient zur Wartung bzw. Aufrüstung der Fertigungseinheiten 4 bis 11. Die Wartungs-Umlaufbahn 25 ist rechteckförmig ausgebildet und umfasst den Fertigungs-Bahnabschnitt 27 und einen parallel dazu angeordneten und in der x-Richtung verlaufenden Wartungs-Bahnabschnitt 39, die durch zwei in der y-Richtung verlaufende Verbindungs-Bahnabschnitte 40, 41 miteinander verbunden sind. Die Bahnabschnitte 39 bis 41 sind ebenfalls geradlinig ausgebildet. Die Bahnabschnitte 27 und 39 bis 41 begrenzen einen Wartungs-Innenraum 42 und trennen diesen von einen Wartungs-Außenraum 43 ab.

In den Wartungs-Innenraum 42 und dem Wartungs-Außenraum 43 erstrecken sich ausgehend von dem Wartungs-Bahnabschnitt 39 jeweils drei sackgassenartige Stations-Bahnabschnitte 44 bis 46 und 47 bis 49. Die Stations-Bahnabschnitte 44 bis 46 und 47 bis 49 sind in der x-Richtung gleichmäßig beabstandet voneinander angeordnet, so dass die im Wartungs-Innenraum 42 und die im Wartungs-Außenraum 43 befindlichen Stations-Bahnabschnitte 44 bis 49 einander paarweise gegenüberliegen. Zum Verfahrrichtungswechsel der Fertigungseinheiten 4 bis 11 sind zwischen den Verbindungs-Bahnabschnitten 40 bzw. 41 und dem Wartungs-Bahnabschnitt 39 sowie zwischen dem Wartungs-Bahnabschnitt 39 und den Stations-Bahnabschnitten 44 bis 49 fünf weitere Schwenkstationen 50 bis 54 angeordnet, die zugehörige und parallel zu der z-Richtung verlaufende Schwenkachsen 55 bis 59 ausbilden. Zur Wartung und/oder Aufrüstung der Fertigungseinheiten 4 bis 11 sind benachbart zu den Stations-Bahnabschnitten 44 bis 49 mehrere Wartungsstationen 60 ausgebildet.

Die Führungsbahn 12 weist ein Traggestell 61 auf, das mit der Fundamentplatte 13 verbunden ist. An dem Traggestell 61 sind zwei seitliche Führungsschienen 62, 63 angeordnet, an denen die Fertigungseinheiten 4 bis 11 geführt sind. Zusätzlich weist die Führungsbahn 12 eine mittige Führungsnut 64 auf, in der die Fertigungseinheiten 4 bis 11 ebenfalls geführt sind. Zum Verfahren der Fertigungseinheiten 4 bis 11 auf der Führungsbahn 12 ist seitlich in der Führungsnut 64 eine Zahnleiste 73 angeordnet.

Seitlich an dem Traggestell 61 sind Schleifkontakte 65 angeordnet, die zur Energieübertragung auf die Fertigungseinheiten 4 bis 11 mit einer zentralen Energieversorgung 66 verbunden sind.

Die Schwenkstationen 31 bis 34 und 50 bis 54 sind baugleich ausgebildet, so dass nachfolgend lediglich die Schwenkstation 31 beschrieben ist. Die Schwenkstation 31 bildet einen Schwenk-Bahnabschnitt 67 der Führungsbahn 12 aus, der mittels eines Antriebsmotors 68 um die Schwenkachse 35 verschwenkbar ist. Der Schwenk-Bahnabschnitt 67 ist prinzipiell wie die restliche Führungsbahn 12 ausgebildet, jedoch sind zwischen dem Traggestell 61 und der Fundamentplatte 13 zusätzlich zwei Schwenkteile 69, 70 angeordnet, die relativ zueinander verschwenkbar sind. Auf dem plattenförmigen ersten Schwenkteil 69 ist das Traggestell 61 und der Antriebsmotor 68 angeordnet, wohingegen das zweite Schwenkteil 70 auf der Fundamentplatte 13 befestigt ist. Das zweite Schwenkteil 70 weist an dem dem ersten Schwenkteil 69 zugewandten Ende einen Zahnkranz 71 auf, in den ein Zahnrad 72 eingreift, das mittels des Antriebsmotors 68 drehantreibbar ist. Das Zahnrad 72 ist mittels des Antriebsmotors 68 in zwei Drehrichtungen drehantreibbar, so dass der Schwenk-Bahnabschnitt 67 in zwei Schwenkrichtungen verschwenkbar ist. Der Schwenk-Bahnabschnitt 67 ist in beiden Schwenkrichtungen um 90 ° verschwenkbar.

Die Fertigungseinheiten 4 bis 11 sind autark ausgebildet und unabhängig voneinander verfahrbar. Die Fertigungseinheiten 4 bis 11 sind baugleich ausgebildet, so dass nachfolgend lediglich die Fertigungseinheit 4 beschrieben ist. Die Fertigungseinheit 4 weist einen Schlitten 74 auf, der an den Führungsschienen 62, 63 und in der Führungsnut 64 gelagert und geführt ist. An einer Unterseite des Schlittens 74 sind zwei Antriebsmotoren 75 befestigt, die jeweils über ein Winkelgetriebe 76 ein Zahnrad 77 drehantreiben. Das jeweilige Zahnrad 77 ist in Eingriff mit der Zahnleiste 73, so dass die Fertigungseinheit 4 auf der Führungsbahn 12 linear verfahrbar ist. Die Oberseite des Schlittens 74 dient als Plattform für eine Positioniereinrichtung 78, zwei kühlbare Materialspeicher 79, 80, eine Kühleinrichtung 81, eine Energieversorgungseinrichtung 82 und eine Steuereinrichtung 83. Mittels der Steuereinrichtung 83 sind die Antriebsmotoren 75 derart ansteuerbar, dass zwischen den Zahnrädern 77 und der Zahnleiste 73 eine Vorspannung und somit ein spielfreies Antriebssystem erzeugt wird, sodass eine hohe Positioniergenauigkeit erzielbar ist.

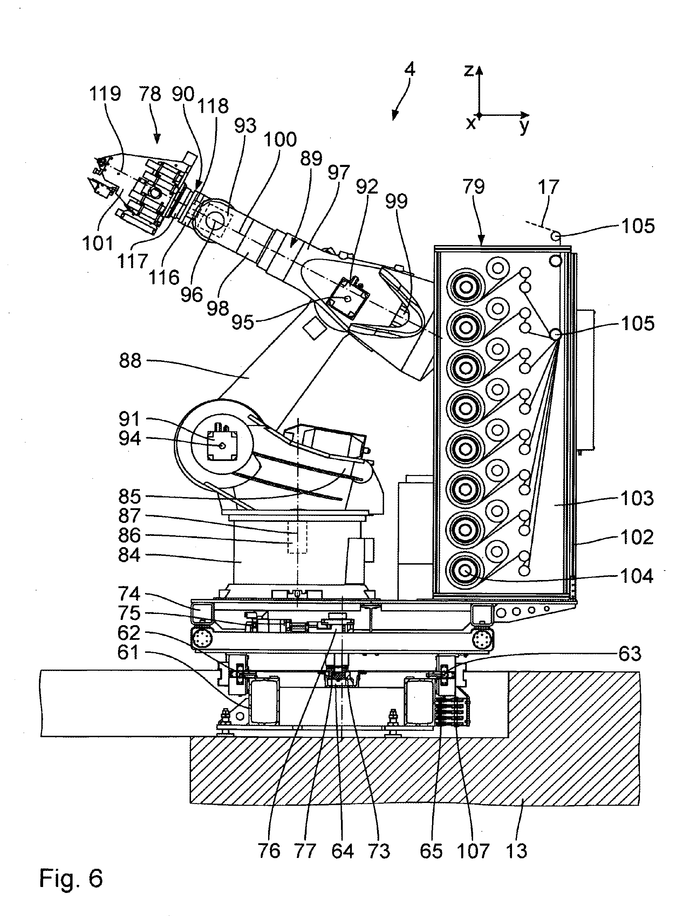

Die Positioniereinrichtung 78 ist als Roboter bzw. Industrieroboter ausgebildet und ist mit einem Grundgestell 84 fest an dem Schlitten 74 angeordnet. Auf dem Grundgestell 84 ist ein als Karussell bezeichnetes Schwenkteil 85 angeordnet, das mittels eines Antriebsmotors 86 um eine parallel zu der z-Richtung verlaufende vertikale Schwenkachse 87 verschwenkbar ist. An dem Schwenkteil 85 sind drei endseitig miteinander verbundene Schwenkarme 88, 89, 90 angeordnet, die mittels jeweiliger Antriebsmotoren 91, 92, 93 um zugehörige, horizontal verlaufende Schwenkachsen 94, 95, 96 verschwenkbar sind. Der Schwenkarm 89 ist zweiteilig ausgebildet und weist zwei Schwenkteile 97, 98 auf, die mittels eines Antriebsmotors 99 um ihre Mittellängsachse 100 relativ zueinander verschwenkbar sind. Die Mittellängsachse 100 der Schwenkteile 97, 98 bildet somit eine weitere Schwenkachse. Entsprechend ist der Schwenkarm 90 zweiteilig ausgebildet und weist zwei Schwenkteile 116, 117 auf, die mittels eines Antriebsmotors 118 um eine Mittellängsachse 119 relativ zueinander verschwenkbar sind. In Fig. 6 fallen die Mittellängsachse 100 und die Mittellängsachse 119 zusammen. Die Mittellängsachse 119 der Schwenkteile 116, 117 bildet somit eine weitere Schwenkachse. An dem Schwenkarm 90 ist endseitig ein als Faserlegekopf ausgebildetes Bearbeitungswerkzeug 101 angeordnet. Das Bearbeitungswerkzeug 101 ist somit um sechs Schwenkachsen 87, 94, 95, 96, 100 und 119 verschwenkbar. Da die Positioniereinrichtung 78 entlang der Führungsbahn 12 verfahrbar ist, stellt diese für die Positioniereinrichtung 78 zusätzlich eine lineare Achse bereit.

Das Bearbeitungswerkzeug bzw. der Endeffektor 101 dient zum Auftragen des Faserverbundmaterials 17 auf die Bauteilformen 15, 16. Zur Bereitstellung des Faserverbundmaterials 17 dienen die auf dem Schlitten 74 angeordneten Materialspeicher 79, 80. Die Materialspeicher 79, 80 sind baugleich ausgebildet, so dass nachfolgend lediglich der Materialspeicher 79 beschrieben ist. Der Materialspeicher 79 weist ein Gehäuse 102 auf, dessen Innenraum 103 mittels der Kühleinrichtung 81 kühlbar ist. In dem Innenraum 103 sind mehrere Materialrollen 104 mit dem bahnförmigen Faserverbundmaterial 17 drehbar gelagert. Das Faserverbundmaterial 17 ist jeweils über mehrere Umlenkrollen 105 aus dem Materialspeicher 79 und zu dem Bearbeitungswerkzeug 101 geführt. Das Faserverbundmaterial 17 ist mittels des Bearbeitungswerkzeuges 101 durch Ausüben einer Zugkraft aus dem Materialspeicher 79 entnehmbar. Die Kühleinrichtung 81 ist zur Kühlung beider Materialspeicher 79, 80 zwischen diesen angeordnet. Oberhalb der Kühleinrichtung 81 und zwischen den Materialspeichern 79, 80 ist ein Schaltschrank 106 angeordnet, in dem die Energieversorgungseinrichtung 82 und die Steuereinrichtung 83 angeordnet sind. Die Energieversorgungseinrichtung 82 ist derart ausgebildet, dass die Fertigungseinheit 4 entlang der gesamten Führungsbahn 12 frei verfahrbar ist. Hierzu weist die Energieversorgungseinrichtung 82 Schleifkontakte 107 auf, die an dem Schlitten 74 angeordnet in Kontakt mit den Schleifkontakten 65 sind. Mittels der Schleifkontakte 65, 107 ist elektrische Energie von der zentralen Energieversorgung 66 zu der Energieversorgungseinrichtung 82 übertragbar. Die Energieversorgungseinrichtung 82 versorgt durch eine geeignete Schaltung alle auf dem Schlitten 74 angeordnete Verbraucher, insbesondere die Antriebsmotoren 75, 86, 91, 92, 93, 99, 118 die Kühleinrichtung 81 und die Steuereinrichtung 83 mit elektrischer Energie.

Das Bearbeitungswerkzeug 101 ist auswechselbar an dem Schwenkarm 90 befestigt, so dass dieses durch ein anderes Bearbeitungswerkzeug bzw. einen anderen Endeffektor 108 ersetzbar ist. Das Bearbeitungswerkzeug bzw. der Endeffektor 108 liegt beispielsweise an einer der Wartungsstationen 60 bereit und dient für einen mechanischen Bearbeitungsschritt des Faserverbundmaterial-Bauteils 2. Das Bearbeitungswerkzeug 108 ermöglicht beispielsweise eine Bohr- oder Fräsbearbeitung.

Die Fertigungsanlage 1 weist eine Leit-Steuereinrichtung 109 auf, die über ein drahtloses Netzwerk, also WLAN mit den Steuereinrichtungen 83 der Fertigungseinheiten 4 bis 11 zur Übertragung von Daten in Signalverbindung steht. Aufgrund der Größe der Fertigungsanlage 1 weist die Leit-Steuereinrichtung 109 hierzu mehrere Verbindungsstellen 110 auf, die auch als Access-Points bezeichnet werden. Die Leit-Steuereinrichtung 109 dient zur Übertragung von NC-Steuerprogrammen für die Fertigungseinheiten 4 bis 11. Die Fertigungsanlage 1 kann somit zentral konfiguriert werden, so dass eine schnelle Umstellung der Fertigung möglich ist. Die Steuerung der Fertigungseinheiten 4 bis 11 erfolgt dezentral mittels der jeweiligen Steuereinrichtung 83. Die Steuereinrichtungen 83 sind somit derart ausgebildet, dass diese das Verfahren der Fertigungseinheiten 4 bis 11 unabhängig von der Leit-Steuereinrichtung 109 steuern.

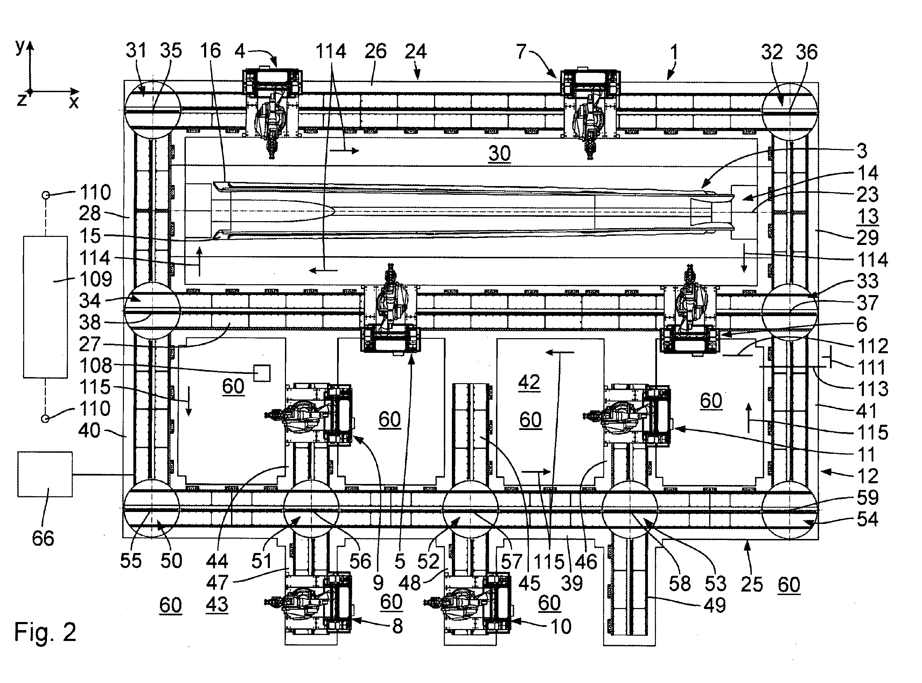

Die Fertigungsanlage 1 weist einen Schutzzaun 111 auf, der die gesamte Fertigungsanlage 1 umfangsseitig umgibt. Zwischen dem Fertigungs-Bahnabschnitt 27 und den Wartungsstationen 60 ist ebenfalls ein Schutzzaun 112 angeordnet, der im Bereich der Verbindungs-Bahnabschnitte 40, 41 Türen 113 aufweist, die mittels einer jeweiligen Lichtschranke betätigbar sind. Die Schutzzäune 111, 112 sind in Fig. 2 lediglich angedeutet.

Zur Herstellung der zwei Faserverbundmaterial-Bauteile 2 werden die Fertigungseinheiten 4 bis 7 auf der Prozess-Umlaufbahn 24 im Kreismodus betrieben und in der Verfahrrichtung 114 um die Bauteilformen 15, 16 verfahren. Der Verfahrrichtungswechsel zwischen den Fertigungs-Bahnabschnitten 26, 27 und den dazwischen liegenden Verbindungs-Bahnabschnitten 28, 29 erfolgt mittels der jeweiligen Schwenkstation 31 bis 34. Befinden sich die Fertigungseinheiten 4 bis 7 auf den Fertigungs-Bahnabschnitten 26, 27, wird auf die jeweilige Bauteilform 15, 16 Faserverbundmaterial 17 aufgetragen. Die weiteren Fertigungseinheiten 8 bis 11 befinden sich auf den Stations-Bahnabschnitten 44, 46, 47, 48 und werden an den zugehörigen Wartungsstationen 60 gewartet und/oder aufgerüstet.

Sobald eine der Fertigungseinheiten 4 bis 7 ein technisches Problem hat oder infolge Materialmangels den Herstellungsvorgang abbrechen muss, steht unmittelbar eine der Fertigungseinheiten 8 bis 11 bereit, die den Herstellungsvorgang fortführen kann. Muss beispielsweise die Fertigungseinheit 5 den Herstellungsvorgang abbrechen, so kann diese über die Schwenkstationen 34, 50 und 52 dem Stations-Bahnabschnitt 45 zugeführt werden. Gleichzeitig kann beispielsweise die Fertigungseinheit 11 über die Schwenkstationen 53, 54 und 33 in die Prozess-Umlaufbahn 24 integriert werden, so dass diese mit dem Herstellungsvorgang fortfahren kann. Wenn demgegenüber die Fertigungseinheit 7 den Herstellungsvorgang infolge Materialmangels abbrechen muss, kann diese bereits über die Schwenkstation 33 aus der Prozess-Umlaufbahn 24 entnommen und über die Schwenkstationen 54, 53 dem Stations-Bahnabschnitt 49 zugeführt werden. Gleichzeitig kann beispielsweise die Fertigungseinheit 8 über die Schwenkstationen 51, 50 und 34 der Prozess-Umlaufbahn 24 zugeführt werden, so dass diese mit dem Herstellungsvorgang fortfahren kann. Die Schwenkstationen 33 und 34 stellen somit Weichen dar, die die Fertigungseinheiten 4 bis 11 entweder in der Prozess-Umlaufbahn 24 belassen oder in die Wartungs-Umlaufbahn 25 überführen. Gleichzeitig dienen die Schwenkstationen 33, 34 dazu, gewartete bzw. aufgerüstete Fertigungseinheiten 4 bis 11 wieder in die Prozess-Umlaufbahn 24 zu integrieren. Vorzugsweise werden die Fertigungseinheiten 4 bis 11 so betrieben, dass diese über die Schwenkstation 34 aus der Prozess-Umlaufbahn 24 entnommen und über die Schwenkstation 33 in die Prozess-Umlaufbahn 24 integriert werden. Die Fertigungseinheiten 4 bis 11 weisen somit in der Wartungs-Umlaufbahn 25 eine einheitliche Verfahrrichtung 115 auf.

Die Fertigungseinheiten 4 bis 11 werden mittels der jeweiligen Steuereinrichtung 83 dezentral gesteuert und verfahren. Die Steuereinrichtungen 83 der Fertigungseinheiten 4 bis 11 weisen somit weder untereinander noch mit der Leit-Steuereinrichtung 109 eine gemeinsame Zeitbasis auf. Die Leit-Steuereinrichtung 109 dient zum schnellen Konfigurieren der Steuereinrichtungen 83 bei einem Bauteilwechsel.

Die Sicherheitsüberwachung zur Vermeidung von Kollisionen zwischen den Fertigungseinheiten 4 bis 11 erfolgt beispielsweise durch Abstandssensoren an den Fertigungseinheiten 4 bis 11 oder durch ein Positionsüberwachungssystem, das beispielsweise als Indoor-GPS-System ausgebildet ist und die Positionen der Fertigungseinheiten 4 bis 11 überwacht. Das Positionsüberwachungssystem kann beispielsweise mit den Fertigungseinheiten 4 bis 11 und/oder mit der Leit-Steuereinrichtung 109 in Signalverbindung stehen, so dass einzelne Fertigungseinheiten 4 bis 11 zur Vermeidung von Kollisionen gestoppt oder insgesamt ein Notaus-Signal für alle Fertigungseinheiten 4 bis 11 erzeugt werden kann. Weiterhin können die einzelnen Steuereinrichtungen 83 der Fertigungseinheiten 4 bis 11 untereinander über WLAN kommunizieren, so dass Kollisionen durch eine dezentrale Kommunikation zwischen den Fertigungseinheiten 4 bis 11 vermieden werden können.

Die Fertigungsanlage 1 weist im Vergleich zu bekannten Fertigungsanlagen eine wesentlich höhere Fertigungsproduktivität und -flexibilität auf. Aufgrund der Ausgestaltung der Führungsbahn 12, die zwei Umlaufbahnen 24, 25 ausbildet, ist eine Vielzahl von Verfahrmöglichkeiten gegeben, so dass eine hohe Flexibilität während des Herstellvorgangs sowie während der Wartung und Aufrüstung der Fertigungseinheiten 4 bis 11 besteht. Dies gilt insbesondere dann, wenn eine der Fertigungseinheiten 4 bis 11 infolge eines technischen Problems kurzfristig und unerwartet den Herstellungsvorgang abbrechen muss.

## Patentansprüche

1. Fertigungsanlage zur Herstellung von Faserverbundmaterial-Bauteilen mit
- einer Formbereitstellungseinheit (3), die mindestens eine an einem Formträger (14) angeordnete Bauteilform (15, 16) für ein Faserverbundmaterial-Bauteil (2) aufweist,
- mindestens zwei Fertigungseinheiten (4 bis 11) zum Auftragen eines Faserverbundmaterials (17) auf die mindestens eine Bauteilform (15, 16), die auf einer Führungsbahn (12) verfahrbar angeordnet sind, wobei
- die Führungsbahn (12) um die Formbereitstellungseinheit (3) umlaufend ausgebildet ist und
- die Formbereitstellungseinheit (3) von den mindestens zwei Fertigungseinheiten (4 bis 11) entlang der Führungsbahn (12) umfahrbar ist, wobei die Führungsbahn (12) eine erste Umlaufbahn (24) zur Herstellung des Faserverbundwerkstoff-Bauteils (2) und einen dazu separaten Wartungs-Bahnabschnitt (39) zur Wartung der mindestens zwei Fertigungseinheiten (4 bis 11) ausbildet, wobei der Wartungs-Bahnabschnitt (39) ein Teil einer zweiten Umlaufbahn (25) ist, wobei an dem Wartungs-Bahnabschnitt (39) mehrere sackgassenartige Stations-Bahnabschnitte (44 bis 49) zur Ausbildung von Wartungsstationen (60) angeordnet sind und wobei der Wartungs-Bahnabschnitt (39) einen Innenraum (42) von einem Außenraum (43) trennt , dadurch gekennzeichet, dass die Stations-Bahnabschnitte (44 bis 49) in dem Innenraum (42) angeordnet sind.

2. Fertigungsanlage nach Anspruch 1, **dadurch gekennzeichnet, dass** die Führungsbahn (12) mindestens eine rechteckförmige Umlaufbahn (24, 25) ausbildet und mehrere Schwenkstationen (31 bis 34 und 50 bis 54) aufweist, mittels denen die mindestens zwei Fertigungseinheiten (4 bis 11) zum Verfahrrichtungswechsel verschwenkbar sind.

3. Fertigungsanlage nach einem der Ansprüche 1 oder 2, **dadurch gekennzeichnet, dass** die Führungsbahn (12) zwei Fertigungs-Bahnabschnitte (26, 27) aufweist, die relativ zu der Formbereitstellungseinheit (3) derart angeordnet sind, dass das Faserverbundmaterial (17) zweiseitig auf die mindestens eine Bauteilform (15, 16) auftragbar ist, wobei die zwei Fertigungs-Bahnabschnitte (26, 27) insbesondere geradlinig ausgebildet sind.

4. Fertigungsanlage nach einem der Ansprüche 1 bis 3, **gekennzeichnet durch** mindestens fünf, insbesondere mindestens sechs, und insbesondere mindestens acht Fertigungseinheiten (4 bis 11), die autark ausgebildet und unabhängig voneinander verfahrbar sind.

5. Fertigungsanlage nach einem der Ansprüche 1 bis 4, **dadurch gekennzeichnet, dass** jede der Fertigungseinheiten (4 bis 11) umfasst:
- einen auf der Führungsbahn (12) verfahrbaren Schlitten (74),
- eine an dem Schlitten (74) angeordnete Positioniereinrichtung (78),
- ein an der Positioniereinrichtung (78) angeordnetes Bearbeitungswerkzeug (101) zum Auftragen des Faserverbundmaterials (17),
- einen an dem Schlitten (74) angeordneten Materialspeicher (79, 80) zur Bereitstellung des Faserverbundmaterials (17), der insbesondere kühlbar ist,
- eine an dem Schlitten (17) angeordnete Energieversorgungseinrichtung (82), die derart ausgebildet ist, dass die Fertigungseinheit (4 bis 11) entlang der gesamten Führungsbahn (12) frei verfahrbar ist, und
- eine an dem Schlitten (74) angeordnete Steuereinrichtung (83).

6. Fertigungsanlage nach Anspruch 5, **dadurch gekennzeichnet, dass** die Energieversorgungseinrichtung (82) einen ersten Schleifkontakt (107) aufweist, der zur Übertragung von elektrischer Energie mit einem an der Führungsbahn (12) angeordneten zweiten Schleifkontakt (65) in Kontakt ist.

7. Fertigungsanlage nach Anspruch 5 oder 6, **dadurch gekennzeichnet, dass** die Positioniereinrichtung (78) als Roboter ausgebildet ist und mindestens vier, insbesondere mindestens fünf, und insbesondere mindestens sechs Schwenkachsen (87, 94, 95, 96, 100, 119) für das Bearbeitungswerkzeug (101) aufweist.

8. Fertigungsanlage nach einem der Ansprüche 5 bis 7, **dadurch gekennzeichnet, dass** mindestens eine der Fertigungseinheiten (4 bis 11) mehrere Bearbeitungswerkzeuge (101, 108) aufweist, wobei jedes der Bearbeitungswerkzeuge (101, 108) auswechselbar an der Positioniereinrichtung (78) befestigbar ist.

9. Fertigungsanlage nach einem der Ansprüche 5 bis 8, **dadurch gekennzeichnet, dass** die Steuereinrichtung (83) derart ausgebildet ist, dass Daten von einer Leit-Steuereinrichtung (109) drahtlos zu dieser übertragbar sind.

10. Fertigungsanlage nach einem der Ansprüche 5 bis 9, **dadurch gekennzeichnet, dass** die Steuereinrichtung (83) derart ausgebildet ist, dass diese das Verfahren der Fertigungseinheit (4 bis 11) unabhängig von einer Leit-Steuereinrichtung (109) steuert.

## Claims

1. Manufacturing system for producing fibre composite material components, comprising
- a mould providing unit (3), which has at least one component mould (15, 16), arranged on a mould support (14), for a fibre composite material component (2),
- at least two production units (4 to 11), which are intended for applying a fibre composite material (17) to the at least one component mould (15, 16) and are arranged such that they can be moved on a guiding track (12), wherein
- the guiding track (12) is designed to run around the mould providing unit (3) and
- the at least two production units (4 to 11) can move around the mould providing unit (3) along the guiding track (12), wherein
the guiding track (12) forms a first running-around track (24) for the production of the fibre composite material component (2) and, separate from it, a maintenance track section (39) for the maintenance of the at least two production units (4 to 11), the maintenance track section (39) being part of a second running-around track (25), a number of dead-end-like station track sections (44 to 49) being arranged on the maintenance track section (39) to form maintenance stations (60) and the maintenance track section (39) separating an interior space (42) from an exterior space (43), **characterized in that** the station track sections (44 to 49) are arranged in the interior space (42).

2. Manufacturing system according to Claim 1, **characterized in that** the guiding track (12) forms at least one rectangular running-around track (24, 25) and has a number of swivelling stations (31 to 34 and 50 to 54), by means of which the at least two production units (4 to 11) can be swivelled for changing the direction of movement.

3. Manufacturing system according to either of Claims 1 and 2, **characterized in that** the guiding track (12) has two production track sections (26, 27), which are arranged in relation to the mould providing unit (3) in such a way that the fibre composite material (17) can be applied to the at least one component mould (15, 16) on two sides, the two production track sections (26, 27) being formed in particular in a linear manner.

4. Manufacturing system according to one of Claims 1 to 3, **characterized by** at least five, in particular at least six, and in particular at least eight production units (4 to 11), which are formed autonomously and can be moved independently of one another.

5. Manufacturing system according to one of Claims 1 to 4, **characterized in that** each of the production units (4 to 11) comprises:
- a carriage (74), which can move on the guiding track (12),
- a positioning device (78), which is arranged on the carriage (74),
- a processing tool (101), which is arranged on the positioning device (78) and is intended for applying the fibre composite material (17),
- a material store (79, 80), which is arranged on the carriage (74), is intended for providing the fibre composite material (17) and in particular is coolable,
- an energy supplying device (82), which is arranged on the carriage (17) and is formed in such a way that the production unit (4 to 11) can be moved freely along the entire guiding track (12), and
- a control device (83), which is arranged on the carriage (74).

6. Manufacturing system according to Claim 5, **characterized in that** the energy supplying device (82) has a first sliding contact (107), which for the transmission of electrical energy is in contact with a second sliding contact (65), which is arranged on the guiding track (12).

7. Manufacturing system according to Claim 5 or 6, **characterized in that** the positioning device (78) is formed as a robot and has at least four, in particular at least five, and in particular at least six swivelling axes (87, 94, 95, 96, 100, 119) for the processing tool (101).

8. Manufacturing system according to one of Claims 5 to 7, **characterized in that** at least one of the production units (4 to 11) has a number of processing tools (101, 108), each of the processing tools (101, 108) being able to be fastened interchangeably to the positioning device (78).

9. Manufacturing system according to one of Claims 5 to 8, **characterized in that** the control device (83) is formed in such a way that data from a master control device (109) can be transmitted wirelessly to it.

10. Manufacturing system according to one of Claims 5 to 9, **characterized in that** the control device (83) is formed in such a way that it controls the movement of the production unit (4 to 11) independently of a master control device (109).

## Revendications

1. Installation de fabrication de composants en matériau composite fibreux, comprenant
- une unité de préparation de moule (3) qui présente au moins un moule de composant (15, 16) disposé sur un support de moule (14) pour un composant en matériau composite fibreux (2),
- au moins deux unités de fabrication (4 à 11) pour appliquer un matériau composite fibreux (17) sur l'au moins un moule de composant (15, 16), lesquelles sont disposées de manière déplaçable sur une voie de guidage (12),
- la voie de guidage (12) étant réalisée tout autour de l'unité de préparation de moule (3) et
- l'unité de préparation de moule (3) pouvant être contournée par les au moins deux unités de fabrication (4 à 11) le long de la voie de guidage (12),
la voie de guidage (12) constituant une première voie périphérique (24) pour fabriquer le composant en matériau composite fibreux (2) et une section de voie d'entretien (39) séparée de celle-ci pour l'entretien des au moins deux unités de fabrication (4 à 11), la section de voie d'entretien (39) faisant partie d'une deuxième voie périphérique (25), plusieurs sections de voie de postes de type impasse (44 à 49) étant disposées au niveau de la section de voie d'entretien (39) pour réaliser des postes d'entretien (60), et la section de voie d'entretien (39) séparant un espace interne (42) d'un espace externe (43), **caractérisée en ce que** les sections de voie de postes (44 à 49) sont disposées dans l'espace interne (42).

2. Installation de fabrication selon la revendication 1, **caractérisée en ce que** la voie de guidage (12) constitue au moins une voie périphérique rectangulaire (24, 25) et présente plusieurs postes pivotants (31 à 34 et 50 à 54) au moyen desquels les au moins deux unités de fabrication (4 à 11) peuvent être pivotées pour changer le sens de déplacement.

3. Installation de fabrication selon l'une quelconque des revendications 1 ou 2, **caractérisée en ce que** la voie de guidage (12) présente deux sections de voie de fabrication (26, 27) qui sont disposées par rapport à l'unité de préparation de moule (3) de telle sorte que le matériau composite fibreux (17) puisse être appliqué des deux côtés sur l'au moins un moule de composant (15, 16), les deux sections de voie de fabrication (26, 27) étant notamment réalisées en ligne droite.

4. Installation de fabrication selon l'une quelconque des revendications 1 à 3, **caractérisée par** au moins cinq, en particulier au moins six, et en particulier au moins huit unités de fabrication (4 à 11), qui sont réalisées de manière autarcique et qui sont déplaçables indépendamment les unes des autres.

5. Installation de fabrication selon l'une quelconque des revendications 1 à 4, **caractérisée en ce que** chacune des unités de fabrication (4 à 11) comprend :
- un chariot (74) déplaçable sur la voie de guidage (12),
- un dispositif de positionnement (78) disposé sur le chariot (74),
- un outil de traitement (101) disposé sur le dispositif de positionnement (78) pour appliquer le matériau composite fibreux (17),
- un dispositif de stockage de matériau (79, 80) disposé sur le chariot (74) pour fournir le matériau composite fibreux (17), qui peut notamment être refroidi,
- un dispositif d'alimentation en énergie (82) disposé sur le chariot (17), qui est réalisé de manière à ce que l'unité de fabrication (4 à 11) puisse être déplacée librement le long de la voie de guidage complète (12), et
- un dispositif de commande (83) disposé sur le chariot (74).

6. Installation de fabrication selon la revendication 5, **caractérisée en ce que** le dispositif d'alimentation en énergie (82) présente un premier contact glissant (107) qui, pour transmettre de l'énergie électrique, est en contact avec un deuxième contact glissant (65) disposé sur la voie de guidage (12).

7. Installation de fabrication selon la revendication 5 ou 6, **caractérisée en ce que** le dispositif de positionnement (78) est réalisé sous forme de robot et présente au moins quatre, en particulier au moins cinq, et en particulier au moins six axes de pivotement (87, 94, 95, 96, 100, 119) pour l'outil de traitement (101).

8. Installation de fabrication selon l'une quelconque des revendications 5 à 7, **caractérisée en ce qu'**au moins l'une des unités de fabrication (4 à 11) présente plusieurs outils de traitement (101, 108), chacun des outils de traitement (101, 108) pouvant être fixé de manière remplaçable sur le dispositif de positionnement (78).

9. Installation de fabrication selon l'une quelconque des revendications 5 à 8, **caractérisée en ce que** le dispositif de commande (83) est réalisé de telle sorte que des données puissent être transmises sans fil depuis un dispositif de commande de guidage (109) à celui-ci.

10. Installation de fabrication selon l'une quelconque des revendications 5 à 9, **caractérisée en ce que** le dispositif de commande (83) est réalisé de telle sorte que celui-ci commande le déplacement de l'unité de fabrication (4 à 11) indépendamment d'un dispositif de commande de guidage (109).
